# EUROPÄISCHE PATENTSCHRIFT

(11) **EP 0 375 088 B1**
(45) Veröffentlichungstag und Bekanntmachung des Hinweises auf die Patenterteilung: **15.06.1994**
(21) Anmeldenummer: 89250112.3
(22) Anmeldetag: 08.12.1989
(51) Int. Cl.: H01H 1/38, H01H 1/42

(54) **Trennkontaktanordnung für die Hauptstrombahnen eines Leistungsschalters**
Disconnecting arrangement for the main current path of a power circuit breaker
Dispositif de coupure pour le trajet du courant principal d'un disjoncteur de puissance

(30) Priorität: 19.12.1988 US 286544
(43) Veröffentlichungstag der Anmeldung: 27.06.1990
(73) Patentinhaber: SIEMENS AKTIENGESELLSCHAFT, 80333 München (DE)
(72) Erfinder: Allen, Frankie H., Acworth Georgie 30101 (US); Leone, David A., Lawrenceville Georgia 30244 (US)

(56) Entgegenhaltungen:
- DE-A- 3 332 141
- DE-B- 1 222 137
- FR-A- 2 296 252
- US-A- 3 867 602
- US-A- 3 890 258

## Beschreibung

Die Erfindung betrifft eine Trennkontaktanordnung für die Hauptstrombahnen eines Leistungsschalters mit
- einem jeder Strombahn zugeordneten Anschlußstück (12),
- paarweise einander gegenüberstehend angeordneten Kontaktfingern (16), die mit ihrem einen Ende an dem Anschlußstück (12) gelenkig abgestützt sind,
- einer relativ zu der Anschlußschiene (12) bewegbaren Stromschiene (14), die mit Endteilen (32) der Kontaktfinger (16) unter Bildung von zwei Kontaktbereichen je Kontaktfinger (16) in Eingriff bringbar ist, und
- Kontaktfedern (18) zur Bereitstellung einer Kontaktkraft zwischen den Kontaktfingern (16) und der Anschlußschiene (12) sowie zwischen den Kontaktfingern (16) und der Stromschiene (14).

Bei einer Trennkontaktanordnung dieser Art (DE-A-33 32 141) sind die Kontaktfinger am Umfang zylindrischer, miteinander zu verbindender Leiter angeordnet. Jeder der Kontaktfinger ist an seinem einen Ende eben und an seinem gegenüberliegenden Ende derart ausgekehlt ausgebildet, daß aufgrund eines kleineren Krümmungsradius der Kehle gegenüber dem Krümmungsradius des zylindrischen Leiters zwei Kontaktbereiche gebildet werden.

Wird eine Trennkontaktanordnung der bekannten Art in Verbindung mit einem Leistungsschalter verwendet, der einem Kurzschlußstrom ausgesetzt sein kann, so werden einer Bewegung der Kontaktfinger relativ zu den Stromschienen während eines Kurzschlusses nur geringe Haltekräfte entgegengesetzt. Die Größe dieser Rückhaltkräfte ergibt sich aus der Reibung zwischen den Kontaktfingern und der Stromschiene, auf der die Kontaktfinger aufliegen. Hiervon ausgehend, liegt der Erfindung die Aufgabe zugrunde, eine Trennkontaktanordnung zu schaffen, welche die Bewegung von Kontaktfingern relativ zu den zugehörigen Stromschienen verhindert, wenn von dem Strom abhängige Kräfte auf die Trennkontaktanordnung einwirken.

Gemäß der Erfindung wird diese Aufgabe dadurch gelöst, daß die Stromschiene auf gegenüberliegenden, zum Eingriff der Kontaktfinger vorgesehenen Seiten je eine Vertiefung aufweist und daß die Kontaktfinger eine gewölbte, mit der Vertiefung nicht übereinstimmende Kontur aufweist.

Damit überschneidet sich die Kontaktanordnung nach der Erfindung von einer Schaltkontaktanordnung für Leistungsschalter, die einen Schaltstift aufweist (US-A-3 867 602). Hier liegen Kontaktfinger mit abgerundeten Endteilen ständig in trapazeförmigen Vertiefungen eines ortsfesten Hohlkontaktes unter Bildung von zwei Kontaktbereichen an. Diese Anordnung hat daher keinen Einfluß auf das Verhalten der Kontaktanordnung beim Zusammenwirken der freien Enden der Kontaktfinger mit dem Schaltstift, da hier glatte Kontaktflächen vorhanden sind.

Bei einem Schwenkmesser-Trennschalter (DE-C-1 222 137) mit Doppelmesser sind am Einschlagkontakt zur Erzielung einer Rastung zwar Vertiefungen vorgesehen. Durch diese wird jedoch jeweils nur ein Kontaktbereich gebildet. Als Trennkontaktanordnung für einen Leistungsschalter ist eine Schwenkmesseranordnung im übrigen nicht verwendbar.

Die Trennkontaktanordnung kann in einer Ausgestaltung der Erfindung so ausgebildet sein, daß der Endteil der Kontaktfinger und die Vertiefungen in der Stromschiene eine kreisbogenförmige Kontur mit verschiedenen Radien aufweisen, wobei die Vertiefungen der Stromschiene den geringeren Radius aufweisen. Bei Aufschieben der Kontaktfinger auf die Stromschiene rasten somit die Kontaktfinger in den Vertiefungen ein. Zugleich werden wenigstens zwei Kontaktbereiche gebildet, die einen sicheren Stromübergang gewährleisten.

Im wesentlichen die gleichen Eigenschaften lassen sich durch eine andere Ausführungsform erzielen, bei der die Vertiefungen der Stromschiene trapezförmig derart gestaltet sind, daß seitliche Schrägflächen je einen Kontaktbereich mit dem Endteil des zugehörigen Kontaktfingers bilden.

Sowohl im Sinne eines Ausgleiches von Ungenauigkeiten als auch im Sinne eines zuverlässigen Stromüberganges wirkt es sich aus, wenn die Vertiefungen der Stromschiene trapezförmig mit einer gegenüber dem Endteil des zugehörigen Kontaktfingers vergrößerten Öffnungsweite gestaltet sind, derart, daß Kontaktbereiche zwischen einer der Schrägflächen und der Bodenfläche der Trapezform gebildet sind. Hierbei ist eine Relativbewegung zwischen den Kontaktfingern und der Stromschiene in axialer Richtung möglich.

Ferner können sich die Vertiefungen unter Bildung von Endflächen nur über einen Teil der Breite der Stromschiene erstrecken. Auf diese Weise wird auch die seitliche Verschiebung der Kontaktfinger relativ zu der Stromschiene wirksam begrenzt.

Die Erfindung wird im folgenden anhand der in den Figuren dargestellten Ausführungsbeispiele näher erläutert.

Die Figuren 1 und 2 zeigen in einer teilweise geschnittenen Seitenansicht und einer Draufsicht eine zum Stand der Technik gehörende Trennkontaktanordnung. Ein in der Figur 1 mit einem gestrichelten Kreis umgebener Bereich ist vergrößert in den Figuren 3, 4 und 5 dargestellt, und zwar entsprechend unterschiedlichen Ausführungsformen der Erfindung.

Die Figur 6 zeigt eine Trennkontaktanordnung gemäß den Figuren 3, 4 oder 5 in der Draufsicht.

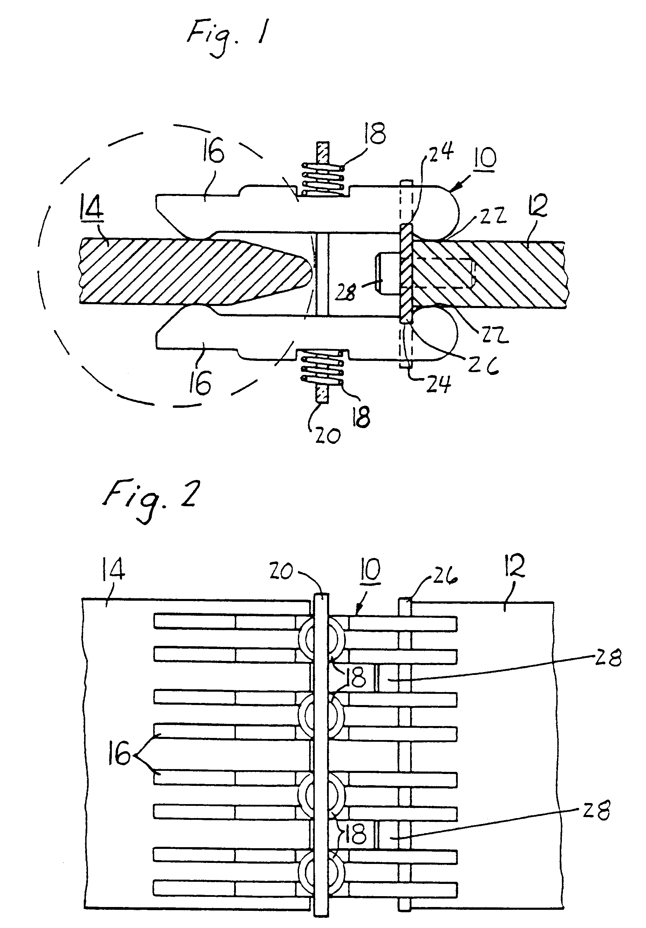

Eine in den Figuren 1 und 2 gezeigte Trennkontaktanordnung 10 ist insbesondere für die Hauptstrombahnen eines Leistungsschalters vorgesehen. Die Trennkontaktanordnung 10 umfaßt acht Paare von Kontaktfingern 16, die an einem Anschlußstück 12 eines nicht gezeigten Leistungsschalters mittels einer Schlitze 24 aufweisenden Halteschiene 26 und wenigstens einer Schraube 28 angebracht sind. Die Kontaktfinger ruhen in den Schlitzen 24 und werden hierdurch in dem vorgesehenen gegenseitigen Abstand gehalten. Ein Federrahmen 20 dient als Widerlager von Druckfedern 18, welche die benötigte Kontaktkraft zur Auflage der Kontaktfinger 16 an einer Stromschiene 14 bereitstellen. Ein Beispiel für einen Leistungsschalter und eine Trennkontaktanordnung ist der US-A-4 218 596 zu entnehmen.

Anhand der folgenden Figuren wird nun erläutert, wie der in dem gestrichelt in Figur 1 gezeigten Kreis enthaltene Bereich der Trennkontaktanordnung 10 in der eingangs erläuterten Weise verbessert wird.

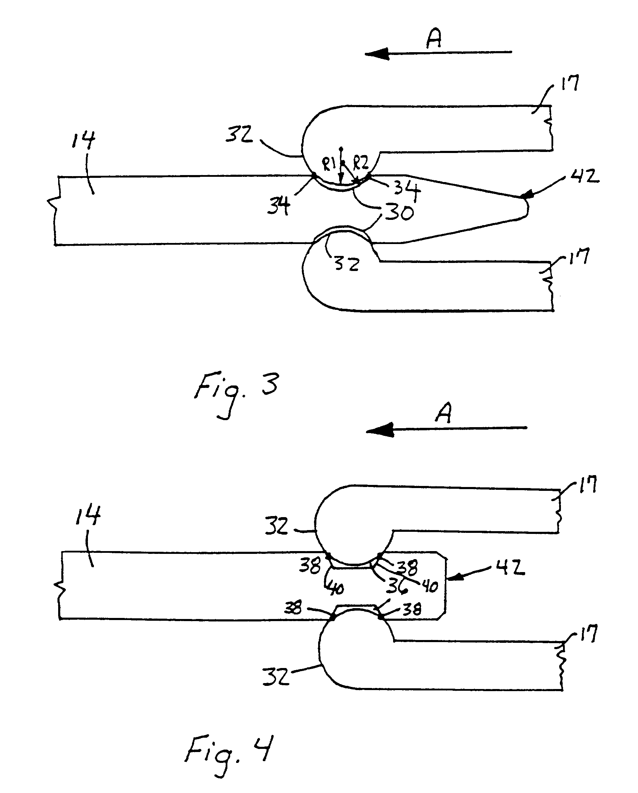

In dem Ausführungsbeispiel gemäß der Figur 3 ist die Stromschiene 14 mit Vertiefungen 30 versehen, die eine kreisbogenförmige Kontur mit dem Radius R2 besitzen. Die Kontaktfinger 17 sind jeweils mit einem Endteil 32 versehen, der gleichfalls eine kreisbogenförmige Kontur, jedoch mit einem größeren Radius R1 aufweist. Aufgrund der unterschiedlichen Kreisradien tauchen die Endteile der Kontaktfinger 17 in die Vertiefungen 30 nicht vollständig ein, sondern gelangen an den Kanten der Vertiefungen 30 der Stromschiene 14 unter Bildung von Kontaktbereichen 34 zur Auflage.

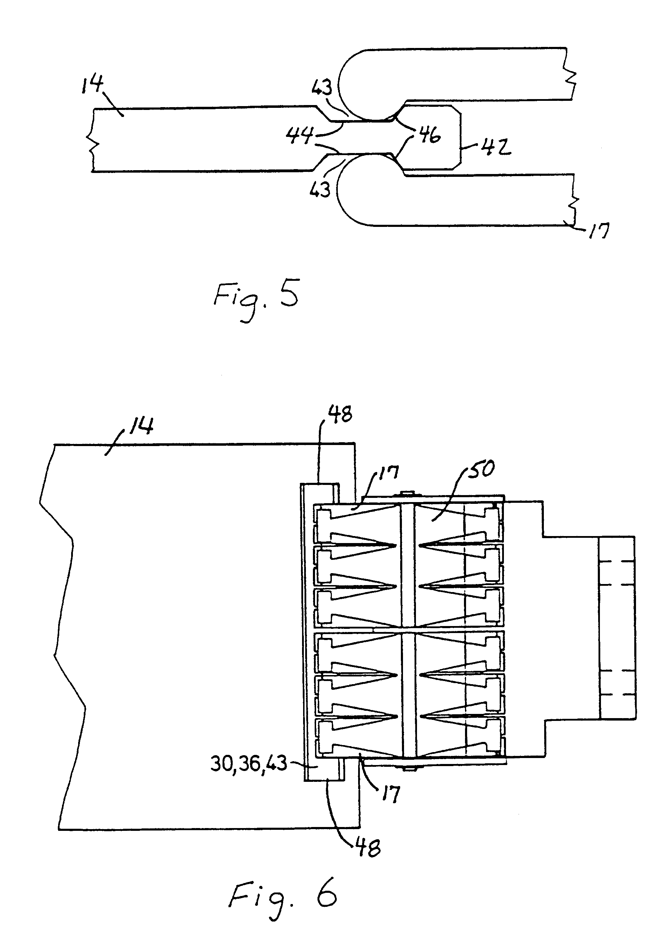

Im wesentlichen die gleichen Eigenschaften wie die Trennkontaktanordnung gemäß der Figur 3 wird bei der in der Figur 4 gezeigten Trennkontaktanordnung mit einer veränderten Form von Vertiefungen 36 in der Stromschiene 14 erzielt. Die Vertiefungen 36 sind etwa trapezförmig gestaltet und weisen zwei schräg zur Oberfläche der Stromschiene 14 verlaufende Schrägflächen 40 auf. Die Tiefe der Vertiefungen 36 ist dabei so gewählt, daß der Endteil jedes Kontaktfingers 17 die Bodenfläche der Vertiefung 36 nicht berührt und sich somit Kontaktbereiche 38 an den Kanten der Schrägflächen 40 ergeben.

Bei der dritten, gleichfalls die erwähnten günstigen Eigenschaften aufweisenden Trennkontaktanordnung gemäß der Figur 5 sind trapezförmige Vertiefungen 43 in der Stromschiene 14 mit einer solchen Breite vorgesehen, daß die Endteile 32 der Kontaktfinger 17 auf der Bodenfläche 44 zur Anlage kommen. Je nach der relativen axialen Stellung der Kontaktfinger und der Stromschiene 14 wird ein zweiter Kontaktbereich an der linken bzw. der rechten Schrägfläche 46 gebildet.

In der jeder der beschriebenen Ausführungsformen kann die Stromschiene 14 mit einem Endteil 42 entsprechend den Figuren 3, 4 und 5 ausgebildet sein. Dieser Endteil gestattet eine Gleitbewegung der Kontaktfinger 17 in der Richtung A entlang der Stromschiene 14 mit vergrößerter Kraft. Aus den Vertiefungen können die Kontaktfinger nur entgegen der Wirkung der Kontaktkraftfedern 18 herausbewegt werden.

Als weitere Sicherung gegen eine Trennung der Kontaktfinger 17 von der Stromschiene 14 kann entsprechend der Darstellung in der Figur 6 jede der Vertiefungen nur entlang einem Teil der Breite der Stromschiene 14 derart angeordnet sein, daß Endflächen 48 gebildet sind, welche ein Mittel bilden, um die Kontaktfinger 17 von dem Abgleiten von der Stromschiene 14 unter dem Einfluß eines Kurzschlußstromes zu hindern.

In der Figur 6 ist noch gezeigt, daß anstelle von Schraubenfedern 18 entsprechend den Figuren 1 und 2 eine Blattfederanordnung 50 vorgesehen sein kann, wie dies an sich bekannt ist.

## Patentansprüche

1. Trennkontaktanordnung für die Hauptstrombahnen eines Leistungsschalters mit
- einem jeder Strombahn zugeordneten Anschlußstück (12),
- paarweise einander gegenüberstehend angeordneten Kontaktfingern (16), die mit ihrem einen Ende an dem Anschlußstück (12) gelenkig abgestützt sind,
- einer relativ zu der Anschlußschiene (12) bewegbaren Stromschiene (14), die mit Endteilen (32) der Kontaktfinger (16) unter Bildung von zwei Kontaktbereichen je Kontaktfinger (16) in Eingriff bringbar ist, und
- Kontaktfedern (18) zur Bereitstellung einer Kontaktkraft zwischen den Kontaktfingern (16) und der Anschlußschiene (12) sowie zwischen den Kontaktfingern (16) und der Stromschiene (14),
**dadurch gekennzeichnet,** daß die Stromschiene (14) auf gegenüberliegenden, zum Eingriff der Kontaktfinger (16) vorgesehenen Seiten je eine Vertiefung (30, 36) aufweist und daß der Endteil (32) der Kontaktfinger (16) eine gewölbte, mit der Vertiefung nicht übereinstimmende Kontur aufweist.

2. Trennkontaktvorrichtung nach Anspruch 1, **dadurch gekennzeichnet,** daß der Endteil (32) der Kontaktfinger (17) und die Vertiefungen (30) in der Stromschiene (14) eine kreisbogenförmige Kontur mit verschiedenen Radien aufweisen, wobei die Vertiefungen in der Stromschiene mit dem geringeren Radius (R2) versehen sind.

3. Trennkontaktvorrichtung nach Anspruch 1, **dadurch gekennzeichnet,** daß die Vertiefungen (36) der Stromschiene (14) trapezförmig derart gestaltet sind, daß seitliche Schrägflächen (40) je einen Kontaktbereich (38) mit dem Endteil (32) des zugehörigen Kontaktfingers (17) bilden.

4. Trennkontaktvorrichtung nach Anspruch 1, **dadurch gekennzeichnet,** daß die Vertiefungen (43) der Stromschiene (14) trapezförmig mit einer gegenüber dem Endteil (32) des zugehörigen Kontaktfingers (17) vergrößerten Öffnungsweite gestaltet sind, derart, daß Kontaktbereiche (46) zwischen einer der Schrägflächen (46) und der Bodenfläche (44) der Trapezform gebildet sind.

5. Trennkontaktanordnung nach einem der vorangehenden Ansprüche, **dadurch gekennzeichnet,** daß sich die Vertiefungen (30, 36) unter Bildung von Endflächen (48) nur über einen Teil der Breite der Stromschiene (14) erstrecken.

## Claims

1. Isolating contact arrangement for the main conducting paths of a circuit breaker having
- a terminal piece (12) assigned to each conducting path,
- contact fingers (16) arranged in pairs opposite each other and supported articulatedly with one end on the terminal piece (12),
- a conductor bar (14) movable relative to the terminal bar (12) which can be brought into engagement with end parts (32) of the contact fingers (16) establishing two contact regions per contact finger (16), and
- contact springs (18) for making a contact force between the contact fingers (16) and the terminal bar (12), and between the contact fingers (16) and the conductor bar (14),
characterised in that the conductor bar (14) is provided on opposite sides with a depression (30, 36) for engaging the contact fingers (16), and in that the end portion (32) of the contact fingers (16) has a curved contour not corresponding with that of the depression.

2. Isolating contact arrangement according to claim 1, characterised in that the end portion (32) of the contact fingers (17), and the depressions (30) in the conductor bar (14) have an arcuate contour with different radii, the depressions in the conductor bar being provided with the smaller radius (R2).

3. Isolating contact arrangement according to claim 1, characterised in that the depressions (36) of the conductor bar (14) are of trapezoidal design such that lateral inclined surfaces (40) each form a contact region (38) with the end portion (32) of the associated contact finger (17).

4. Isolating contact arrangement according to claim 1, characterised in that the depressions (43) of the conductor bar (14) are of trapezoidal design with an aperture width which is enlarged with respect to the end portion (32) of the associated contact finger (17) so that contact regions (46) are formed between one of the inclined surfaces (46) and the base surface (44) of the trapezoid shape.

5. Isolating contact arrangement according to one of the preceding claims, characterised in that the depressions (30, 36) only extend over a portion of the width of the conductor bar (14), forming end surfaces (48).

## Revendications

1. Dispositif de contact de coupure pour les voies de passage de courant principal d'un disjoncteur, comportant
- une pièce de raccordement (12) associée à chaque voie de passage du courant,
- des doigts de contact (16) disposés en vis-à-vis par couples et dont une de leur extrémité prend appui, d'une manière articulée, sur la pièce de raccordement (12),
- un rail conducteur (14), qui est mobile par rapport au conducteur de raccordement (12) et peut être amené en prise avec des éléments d'extrémité (32) des doigts de contact (16) tout en formant deux zones de contact pour chaque doigt de contact (16), et
- des ressorts de contact (18) servant à produire une force de contact entre les doigts de contact (16) et le conducteur de raccordement (12) ainsi qu'entre les doigts de contact (16) et le rail conducteur (14),
caractérisé par le fait que le rail conducteur (14) possède respectivement un renfoncement (30, 36) sur des côtés opposés, prévus pour la coopération des doigts de contact (16), et que la partie d'extrémité (32) des doigts de contact (16) possède un contour cintré, qui ne coïncide pas avec le renfoncement.

2. Dispositif de contact de coupure suivant la revendication 1, caractérisé par le fait que la partie d'extrémité (32) des doigts de contact (17) et les renfoncements (3) ménagés dans le rail conducteur (14) possèdent des contours en forme d'arc de cercle ayant des rayons différents, les renfoncements ménagés dans le rail conducteur possédant le rayon le plus faible (R2).

3. Dispositif à contact de coupure suivant la revendication 1, caractérisé par le fait que les renfoncements (36) du rail conducteur (14) possèdent une forme trapézoïdale en sorte que les surfaces obliques latérales (40) forment respectivement des zones de contact (38) avec la partie d'extrémité (32) du doigt de contact associé (17).

4. Dispositif à contact de coupure suivant la revendication 1, caractérisé par le fait que les renfoncements (43) du rail conducteur (14) sont agencés avec une forme trapézoïdale possédant une largeur d'ouverture qui est accrue par rapport à la partie d'extrémité (32) du plot de contact associé (17), en sorte que les zones de contact (46) sont formées entre l'une des surfaces obliques (46) et la surface de fond (44) de la forme trapézoïdale.

5. Dispositif à contact de coupure suivant l'une des revendications précédentes, caractérisé par le fait que les renfoncements (30, 36) s'étendent uniquement sur une partie de la largeur du rail conducteur (14), en formant des surfaces d'extrémité (48).
